## Europäisches Patentamt

## European Patent Office

## Office européen des brevets

(19)

(11) Veröffentlichungsnummer: **0 108 894**
**B1**

(12) # EUROPÄISCHE PATENTSCHRIFT

(45) Veröffentlichungstag der Patentschrift:
07.01.87

(51) Int. Cl.⁴: **G 01 L 3/10**, **H 01 G 5/01**

(21) Anmeldenummer: 83109455.2

(22) Anmeldetag: 22.09.83

(54) **Kapazitiver Drehmomentaufnehmer.**

(30) Priorität: 14.10.82 JP 179112/82

(43) Veröffentlichungstag der Anmeldung:
23.05.84 Patentblatt 84/21

(45) Bekanntmachung des Hinweises auf die Patenterteilung:
07.01.87 Patentblatt 87/2

(84) Benannte Vertragsstaaten:
DE FR GB NL

(56) Entgegenhaltungen:
AT - B - 305 457

(73) Patentinhaber: FUJI ELECTRIC CO., LTD., 1-1,
Tanabeshinden, Kawasaki-ku, Kawasaki-shi
Kanagawa 210 (JP)

(72) Erfinder: Mitsuru, Tamai, Dipl.-Ing., Suwa-4-2-2-203,
Tama-shi Tokyo (JP)
Erfinder: Yasuhara, Takeshi, Dipl.-Ing.,
Asagayakita-4-7-20, Suginami-ku Tokyo (JP)

(74) Vertreter: Mehl, Ernst, Dipl.-Ing. et al, Postfach 22 01 76,
D-8000 München 22 (DE)

## Beschreibung

Die Erfindung bezieht sich auf einen kapazitiven Drehmomentaufnehmer mit einer Torsionswelle und in zwei voneinander beabstandeten Querschnittsebenen der Welle an dieser befestigten, in zur Wellenlängsachse symmetrischen, parallelen Ebenen angeordneten Kondensatorplatten mit torsionsproportional veränderlichem gegenseitigem Abstand und mit elektrischer Auswertung der resultierenden Kapazitätsänderungen.

Bei diesem Drehmomentaufnehmer bewirkt das zu messende Drehmoment eine Veränderung einer elektrischen Kapazität. Dabei wird eine Beziehung benutzt, nach der eine Torsionswinkelauslenkung eines Drehmomentmesskörpers, die verursacht ist durch den Angriff des zu messenden Drehmomentes, unmittelbar proportional diesem Drehmoment ist. Der Wert des zu messenden Drehmomentes wird bestimmt durch die Messung der elektrischen Kapazitätsänderung.

Bei gebräuchlichen Drehmomentaufnehmern wird vorzugsweise so vorgegangen, dass ein zu messendes Drehmoment mit hoher Genauigkeit in eine Änderung elektrischer Grössen, wie Widerstand, Spannung, Strom oder dergleichen, umgewandelt wird. Diese Grössen können danach leicht weiterverarbeitet werden. Unter diesen gebräuchlichen Einrichtungen ist ein Dehnungsmessstreifen-Drehmomentaufnehmer gut bekannt und in Stückzahlen produziert worden.

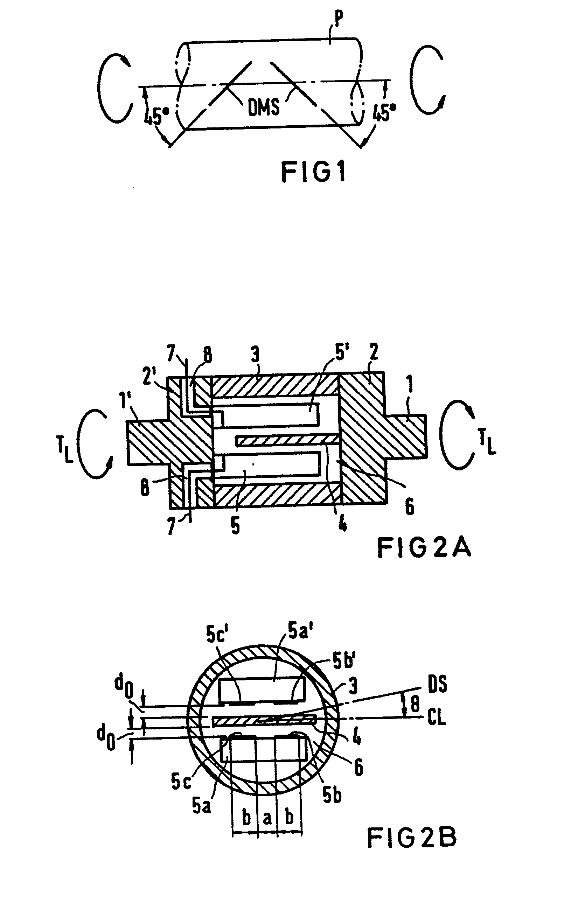

Fig. 1 stellt eine Skizze dar, mit der das Prinzip dieses Typs von Drehmomentaufnehmer gezeigt wird. Der Aufnehmer benutzt den Umstand, dass die Änderung des Widerstandes eines Dehnungsmessstreifens DMS unmittelbar proportional dem Drehmoment ist, wobei der Dehnungsmessstreifen DMS unter einem vorbestimmten Winkel bezüglich einer Achse P angeordnet ist, um die das zu messende Drehmoment wirkt. Meistens ist der Dehnungsmessstreifen an einer Welle mit der Achse P entlang der Hauptdehnungsrichtung (Richtungen von ± 45° gegen die Achse) angeordnet. Entlang dieser Richtungen wird die Zug- oder Druckbeanspruchung ein Maximum. Obgleich der Dehnungsmessstreifen-(DMS)-Drehmomentaufnehmer wegen seiner Einfachheit häufig angewendet wird, zeigt er doch zahlreiche Mängel.

1. Die Betriebscharakteristik des DMS-Drehmomentaufnehmers neigt zu Störungen, die durch Kriechen der Klebstoffschicht oder durch Risse in ihr hervorgerufen werden.

2. Der Betriebstemperaturbereich des DMS-Drehmomentaufnehmers ist begrenzt.

3. Der k-Faktor (Dehnungsmessempfindlichkeit) des Dehnungsmessstreifens und der Temperaturänderungsfaktor des Widerstandes sind gross, und Nebenprodukte von Änderungen dieser Eigenschaften sind ebenfalls gross.

4. Ein oder zwei Paare von Dehnungsmessstreifen werden benötigt, um die Effekte anderer als Drehmomentbelastungen auszuschalten, wie z.B. Axialkräfte und Biegemomente. Trotzdem bleibt die vollständige Kompensation dieser Kräfte schwierig.

5. Es ist äusserst schwierig, die Dehnungsmessstreifen genau in den vorgeschriebenen Winkelrichtungen bezüglich der Achse des Drehmomentaufnehmers anzubringen.

6. Drahtdehnungsmessstreifen zeigen kleine Änderungen des Widerstandes (Signalkomponenten), die durch ein Drehmoment hervorgerufen werden, und deshalb eine geringe Empfindlichkeit, während Halbleiterdehnungsmessstreifen schlechtere Temperaturcharakteristiken und Überlastwiderstandsfähigkeit aufweisen, obschon die Widerstandsänderungen von Halbleiterwiderständen beachtlich sind.

7. Weil eine widerstandsverursachte Messgrössenumwandlung angewendet wird, ist das Ausgangssignal des Drehmomentaufnehmers unausweichlich von Änderungen in der Verdrahtung betroffen.

Ein eingangs beschriebener kapazitiver Drehmomentaufnehmer mit einer Torsionswelle ist im «Archiv für Technisches Messen», ATM Blatt V 136–2 vom August 1938 beschrieben. Die beim Gegenstand des Standes der Technik angewendete volle Torsionswelle, an der die Kondensatorplatten aussen angeordnet sind, weist eine verhältnismässig geringe Biegesteifigkeit auf, so dass das Messergebnis leicht durch Biegemomente, Biegeschwingungen und Querkräfte verfälscht werden kann. Zusätzlich muss die beim Stand der Technik anfallende Kapazitätsänderung eines einfachen Kondensators mit einer entsprechend aufwendigen elektrischen Messschaltung erfasst werden.

Ein Ziel der vorliegenden Erfindung ist es, einen Drehmomentaufnehmer anzugeben, bei dem die oben beschriebenen Mängel im wesentlichen beseitigt sind.

Ein anderes Ziel der Erfindung ist es, einen Drehmomentaufnehmer zu finden, der im Betrieb stabil ist, einfach in der Konstruktion und von äusserster Empfindlichkeit. Diese Aufgabe wird gemäss der Erfindung durch die kennzeichnenden Merkmale des Anspruchs 1 gelöst. Die relative Verdrehungsauslenkung zwischen der Platte und den Belägen, die durch Aufbringen eines Drehmomentes auf wenigstens eines der Flanschglieder hervorgerufen wird, wird demnach in Form einer elektrischen Kapazitätsänderung abgegriffen.

Durch die Wahl eines Torsionsrohres wird für den Drehmomentaufnehmer eine erheblich grössere Widerstandsfähigkeit gegen Biegemomente und Querkräfte gewonnen. Ausserdem wird ein zusätzlicher äusserer Schutzmantel, wie er beim Stand der Technik vorgesehen wird, überflüssig, weil alle empfindlichen Teile innerhalb des Torsionsrohres angeordnet sind.

Die Kondensatorbeläge und die Kondensatorplatte bilden zusammen einen Differentialkondensator. Die Auswertung des Ausgangssignals dieses Differentialkondensators ist vorteilhaft gegenüber der Auswertung der Kapazitätsänderung eines einfachen Kondensators.

Zweckmässig wird das Torsionsrohr evakuiert oder mit einem Stoff gefüllt, der eine geringe zeitliche oder temperaturmässige Änderung seiner Dielektrizitätskonstanten aufweist.

Mit Vorteil wird das Torsionsrohr aus einem nichtrostenden Stahl hergestellt.

Zweckmässig bestehen die Platten, welche mit Kondensatorbelägen versehen sind, aus einem keramischen Material.

Bei der Anwendung des Drehmomentaufnehmers bei einem Drehmomentschrauber wird das von diesem auf eine Mutter oder einen Schraubenbolzen ausgeübte Drehmoment wirkungsvoll und selbsttätig begrenzt.

Die Erfindung wird im folgenden im einzelnen mit Bezug auf die begleitenden Zeichnungen mit sechs Figuren beschrieben werden.

Fig. 1 ist eine Skizze, die nützlich ist zur Erklärung der Betriebsprinzipien von üblichen Drehmomentaufnehmereinrichtungen;

Fig. 2(A) und 2(B) zeigen Prinzipdarstellungen eines Ausführungsbeispiels der vorliegenden Erfindung;

Fig. 3 ist eine Skizze, welche die Auslenkung der drehbaren Elektrode zeigt, wenn ein Biegemoment oder eine Querkraft an den Drehmomentaufnehmer angelegt wird;

Fig. 4 ist ein Blockdiagramm, das den Aufbau und die prinzipielle Schaltung eines Drehmomentschraubers zeigt, bei dem der Drehmomentaufnehmer der vorliegenden Erfindung angewendet ist;

Fig. 5 stellt eine Skizze dar, die für die Erklärung des Betriebs des Drehmomentschraubers dient, und

Fig. 6 ist eine Schnittzeichnung, die die praktische Ausführung des Drehmomentschraubers darstellt.

Bei den Fig. 2(A) und 2(B), die ein bevorzugtes Ausführungsbeispiel der vorliegenden Erfindung zeigen, bedeuten die Bezugszeichen 1 und 1' Drehmomentübertragungswellen. Mit 2 und 2' sind Flansche bezeichnet, während das Bezugszeichen 3 ein drehmomentempfindliches Torsionsrohr bezeichnet. Bezugszeichen 4 gibt eine drehbare Kondensatorplatte (Elektrode) an, die Bezugszeichen 5 (5a, 5b, 5c) und 5' (5a', 5b', 5c') geben Gegenelektroden an. Das Bezugszeichen 7 bedeutet einen Anschlussdraht, und das Bezugszeichen 8 bezeichnet einen hermetisch verschlossenen Zuführungsgang. Weiterhin bezeichnet das Bezugszeichen 6 den Innenraum des Torsionsrohres 3, der gefüllt ist mit einer speziellen dielektrischen Masse.

Ein Drehmoment $T_L$, das festgestellt werden soll, wird durch die drehmomentübertragenden Wellen 1 und 1' den Flanschen 2 und 2' zugeführt. Das Torsionsrohr 3 in zylindrischer Ausführung ist zwischen den Flanschen 2 und 2' angeordnet und wird durch das Drehmoment um seine Längsachse tordiert. Die drehbare Elektrode 4 ragt vom Mittelpunkt des Flansches 2 in den Hohlraum 6 innerhalb des Torsionsrohres 3, während die Platten 5 und 5' für Gegenelektroden so angeordnet sind, dass sie in den Hohlraum 6 von einer inneren Oberfläche des Flansches 2' aus hineinragen, so dass Luftspalte mit einem vorbestimmten Abstand zwischen der drehbaren Kondensatorplatte 4 und den Gegenelektroden auf den Platten 5 und 5' entstehen.

Für den Fall, dass ein Drehmoment auf das Torsionsrohr 3 über die Flansche 2 und 2' aufgebracht wird, erzeugt eine Drehdeformation des Rohres 3 einen relativen Verdrehungswinkel $\Theta$ zwischen der drehbaren Elektrode 4 und den Gegenelektroden auf den Platten 5 und 5', der im folgenden formelmässig ausgedrückt ist:

$$\Theta = 1 \cdot T_L / G \, l_t \qquad (1)$$

Darin bedeutet 1 die Länge des zylindrischen Torsionsrohres 3, G bedeutet den Elastizitätsmodul, den $l_t$ bedeutet das polare Flächenträgheitsmoment. Aus der Gleichung (1) ist ersichtlich, dass das Drehmoment $T_L$ proportional dem relativen Drehwinkel $\Theta$ zwischen der drehbaren Elektrode 4 und den Platten 5 und 5' ist.

Die Platten 5 und 5' bestehen aus isolierenden Teilen 5a und 5a' und elektrisch leitenden Kondensatorbelägen 5b, 5b', und 5c, 5c', die auf den isolierenden Teilen 5a und 5a' angeordnet sind, wie aus der Fig. 2(B) zu erkennen ist. Im Ruhezustand sind die Kondensatorbeläge 5b, 5b' und 5c, 5c' von der drehbaren Kondensatorplatte 4, die aus einem elektrisch leitenden Material besteht, durch einen Abstand $d_0$ voneinander entfernt. Jeder dieser Kondensatorbeläge hat eine vorbestimmte Breite b, und die Kondensatorbeläge 5b und 5b' sind von den Kondensatorbelägen 5c und 5c' durch einen vorbestimmten Abstand a entfernt. In der Folge bestehen vier Kapazitäten durch die bewegliche Kondensatorplatte 4 und die Kondensatorbeläge 5b, 5c, 5b' und 5c'. Obgleich in dem oben beschriebenen Beispiel ein Paar Kondensatorbeläge für jede der Platten 5 oder 5' vorgesehen sind, können zwei oder mehr Paare von Kondensatorbelägen vorgesehen werden, die auf den Platten 5 oder 5' plaziert werden können.

Im Ruhezustand, bei dem das Torsionsrohr 3 kein Drehmoment aufnimmt, sind die Kapazitäten der Kondensatoren, die durch die Kondensatorplatte 4 und die Kondensatorbeläge 5b, 5c, 5b' und 5c' gebildet werden, alle gleich einem Wert $C_0$, der durch die folgende Gleichung (2) dargestellt ist:

$$C_0 = \varepsilon \, A/d_0 = \varepsilon \, 1 \, b/d_0 \qquad (2)$$

Dabei bedeuten $\varepsilon$ die Dielektrizitätskonstante der dielektrischen Masse, A bedeutet die Fläche eines Kondensatorbelages, $d_0$ bedeutet die Entfernung zwischen der drehbaren Kondensatorplatte 4 und den Kondensatorbelägen, 1 stellt die Länge und b die Breite der Kondensatorbeläge dar. Wenn andererseits ein Drehmoment an das Torsionsrohr 3 angelegt wird, so dass das Rohr 3 dadurch deformiert wird, wird die drehbare Kondensatorplatte 4 durch einen Winkel $\Theta$ von ihrer Mittellinie CL in eine Position DS gedreht, die in der Fig. 2(B) gezeigt ist, und die Entfernung $d_0$ zwischen jedem Kondensatorbelag und der drehbaren Kondensatorplatte 4 wird für jeden Teilkondensator nach Art eines Differentialkondensators verändert. Aus diesem Grund sind die Abstände $d_1$, $d_2$, $d_3$ und $d_4$ als Elektrodenabstände von Kapazitäten $C_1 \ldots C_4$ angenommen, und es ist offensichtlich, dass $d_1 = d_4$ und $d_2 = d_3$ ist. So können die Abstände wie folgt ausgedrückt werden:

$$d_1 \, (d_4) = d_0 + \frac{1}{2} \, (a + b) \, \Theta$$

$$d_2 \, (d_3) = d_0 - \frac{1}{2} \, (a + b) \, \Theta \tag{3}$$

Durch Einsetzen des Abstandes $d_0$ in Gleichung (2) anstelle der Abstände $d_1$, $d_2$, $d_3$ und $d_4$, die durch die Gleichung (3) gegeben sind, können die Kapazitäten $C_1 \ldots C_4$ zum Zeitpunkt des Aufbringens des Drehmomentes berechnet werden. Weil es jedoch schwierig ist, eine Beziehung zu finden, die es erlaubt, den Verdrehungswinkel $\Theta$ direkt aus den Kapazitäten $C_1 \ldots C_4$ zu berechnen, werden folgende Zwischengrössen in Übereinstimmung mit vorliegender Erfindung angenommen:

$$f_{2,1} = \frac{1}{C_2} - \frac{1}{C_1} = \frac{1}{C_0} \, (a + b) \, \frac{\Theta}{d_0}$$

$$f_{4,3} = \frac{1}{C_4} - \frac{1}{C_3} = \frac{1}{C_0} \, (a + b) \, \frac{\Theta}{d_0} \tag{4}$$

$$g_{2,1} = \frac{C_2 - C_1}{C_2 + C_1} = \frac{(a + b)}{2d_0} \, \Theta$$

$$g_{4,3} = \frac{C_4 - C_3}{C_4 + C_3} = \frac{(a + b)}{2d_0} \, \Theta \tag{5}$$

Durch Berechnung der Gleichungen (4) und (5) können Grössen abgeleitet werden, die direkt proportional dem Verdrehungswinkel $\Theta$ und damit dem Drehmoment $T_L$ sind. Es sollte beachtet werden, dass die Grössen aus Gleichung (4) abhängig von Veränderungen der Dielektrizitätskonstante der dielektrischen Masse in dem Hohlraum des Torsionsrohres 3 variieren. Die Grössen der Gleichung (5) werden nicht beeinflusst durch diese Dielektrizitätskonstante. In dem angenommenen Fall, bei dem die dielektrische Masse, die den inneren Raum des Torsionsrohres 3 ausfüllt, Luft oder Vakuum ist, ist die Änderung der Dielektrizitätskonstante vernachlässigbar klein, und deshalb kann auch die Gleichung (4) benutzt werden, ohne irgendein Problem hervorzurufen. Es geht aus den Gleichungen (4) und (5) hervor, dass keine Notwendigkeit besteht, zwei Anordnungen von Gegenelektroden tragenden Platten 5 und 5' vorzusehen, eine allein der Elektrodenanordnungen genügt. Weiterhin ist es nicht nötig, wenn zwei Platten 5 und 5' benutzt werden, dass jede der Platten 5 und 5' ein Paar Kondensatorbeläge wie 5b und 5c oder 5b' und 5c' enthält.

Es werden nun andere Lasten als ein Drehmoment, die den Betrieb des Drehmomentaufnehmers beeinflussen können, beschrieben.

1. Axiale Belastungen

Wie aus der Fig. 2(A) hervorgeht, hat eine Axialkraft (die auf die Mittellinie des Aufnehmers einwirkt) keine Auswirkung auf die Bildung von Scherbeanspruchungen in den Durchmesserebenen, welche die drehmomentempfindliche Achse des Aufnehmers schneiden. Aus diesem Grund ist der Verdrehungswinkel $\Theta$ von Änderungen der Axialkraft unabhängig. Weiterhin kann der Effekt einer sehr kleinen Deformation in axialer Richtung des zylindrischen Drehmomentaufnehmers aufgehoben werden durch Vergrösserung der rotierbaren Kondensatorplatte 4 oder der Oberfläche derselben über die Fläche der Kondensatorbeläge 5b, 5c, 5b' und 5c' hinaus. Darüber hinaus kann jede Verlagerung der Platten 5 und 5' kompensiert werden durch eine Vergrösserung der drehbaren Kondensatorplatte 4.

2. Biegemoment oder Querkraft

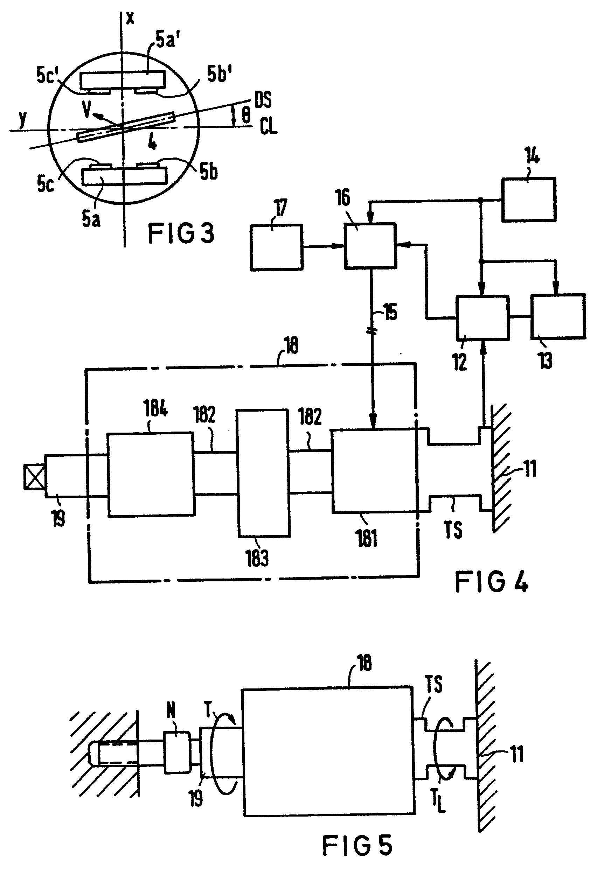

Der Effekt eines Biegemomentes oder einer Querkraft wird nun mit Hinblick auf die Fig. 3 überlegt. Diese entspricht einem Fall, bei dem eine der drehmomentübertragenden Wellen 1 und 1' in Fig. 2(A) fest ist und eine Querkraft auf die andere Welle einwirkt. Es wird angenommen, dass die drehbare Kondensatorplatte 4 durch das Aufbringen einer vertikalen Kraft ausgelenkt wird, wie es durch V in einer Pfeilrichtung in Fig. 3 dargestellt ist. Mit Hilfe von Koordinatenachsen x und y, wie gezeigt angenommen, kann das Auswandern V in Auswandern in x- und y-Achskomponenten $V_x$ und $V_y$ aufgeteilt werden. Die Wirkung der Komponente $V_y$ kann, wie oben schon beschrieben, eliminiert werden, indem eine grössere Fläche der drehbaren Kondensatorplatte 4 als diejenige der Kondensatorbeläge vorgesehen wird. Auf der anderen Seite verändert die Komponente $V_x$ die Entfernungen $d_1 \ldots d_4$ zwischen den Elektroden. In diesem Fall kann die Gleichung (3) wie folgt umgeschrieben werden, indem die Komponente $V_x$ benutzt wird. Es ist offensichtlich, dass die Komponente $V_x$ dahingehend wirkt, die Entfernung zwischen der Kondensatorplatte 4 und der Platte 5 (Kondensatorbeläge 5b und 5c) zu vergrössern und die Entfernung zur Platte 5' (Kondensatorbeläge 5b' und 5c') zu verkleinern:

$$d_1 = d_0 + V_x + \frac{1}{2} \, (a + b) \, \Theta,$$

$$d_4 = d_0 - V_x + \frac{1}{2} \, (a + b) \, \Theta$$

$$d_2 = D_0 + V_x - \frac{1}{2} \, (a + b) \, \Theta,$$

$$d_3 = d_0 - V_x - \frac{1}{2} \, (a + b) \, \Theta \tag{3'}$$

Indem $d_0$ in Gleichung (2) ersetzt wird durch $d_1 \ldots d_4$, die aus Gleichung (3') erhalten werden, können die Kapazitäten $C_1 \ldots C_4$ ausgerechnet werden. Indem man diese Kapazitäten $C_1$ und $C_4$ in die Gleichung (4) einsetzt, können Signale proportional dem Verdrehungswinkel $\Theta$ erhalten werden.

7    0108894    8

Da die Effekte der Komponente $V_x$ sich gegenseitig aufheben, sind Signale, die frei von Wirkungen des Biegemoments oder einer Querkraft sind, zu erhalten. Wenn andererseits die Gleichung (5) benutzt wird, ergibt sich Gleichung (6):

$$g_1 \ldots 4 = g_2, 1 + g_4, 3 = \frac{C_2 - C_1}{C_2 + C_1} + \frac{C_4 - C_3}{C_4 + C_3}$$

$$= \frac{(a + b) \dfrac{\Theta}{d_0}}{2 \left(1 + \dfrac{V_x}{d_0}\right)} + \frac{(a + b) \dfrac{\Theta}{d_0}}{2 \left(1 - \dfrac{V_x}{d_0}\right)}$$

$$= \frac{a + b}{d_0} \, \Theta \cdot \frac{1}{1 - \left(\dfrac{V_x}{d_0}\right)^2} \tag{6}$$

So entsteht dadurch, dass versucht wird, die Wirkungen der Dielektrizitätskonstante $\varepsilon$ zu eliminieren, der Umstand, dass dann die Effekte eines Biegemoments oder einer Querkraft nicht vollständig eliminiert werden können. Die Empfindlichkeit, mit der der Verdrehungswinkel $\Theta$ messbar ist, wird deshalb von der Komponente $V_x$ beeinträchtigt. Weil jedoch gewöhnlich $V_x$ zahlenmässig sehr viel kleiner ist als $d_0$, wird $(V_x/d_0)^2$ äusserst klein, und deshalb kann die Beeinträchtigung der Empfindlichkeit praktisch vernachlässigt werden. Ein Beispiel für mit dem Drehmomentaufnehmer nach der vorliegenden Erfindung erzielte experimentelle Ergebnisse ist im folgenden aufgelistet:
gemessenes Drehmoment ($T_L$): $2 \cdot 10^4$ mm/kg
innerer Durchmesser des Torsionsrohres ($D_i$): 20 mm
äusserer Durchmesser des Torsionsrohres ($D_o$): 25 mm
ursprünglicher Abstand der Elektroden ($d_0$): 0,2 mm
Länge des Torsionsrohres (1): 46 mm
maximale Scherbeanspruchung ($\tau_{max}$): 11 kg/mm$^2$
Verdrehungswinkel ($\Theta$): ungefähr 0,4°

Es wird bestätigt, dass die Änderung der Empfindlichkeit

$$K = \frac{1}{1 - (V_x/d_0)^2}$$

des Aufnehmers zur Zeit der Aufbringung eines Biegemomentes, das 10% des gemessenen Drehmomentes beträgt, weniger als 0,2% ist. Der Grund für diese Tatsache liegt in der zylindrischen Gestaltung des Torsionsrohres, das eine äusserst hohe Steifigkeit gegenüber Biegemomenten aufweist. Aus dieser Tatsache geht auch hervor, dass die errechneten Ergebnisse der Gleichung (6) im wesentlichen frei vom Einfluss eines Biegemomentes oder einer Querkraft sind.

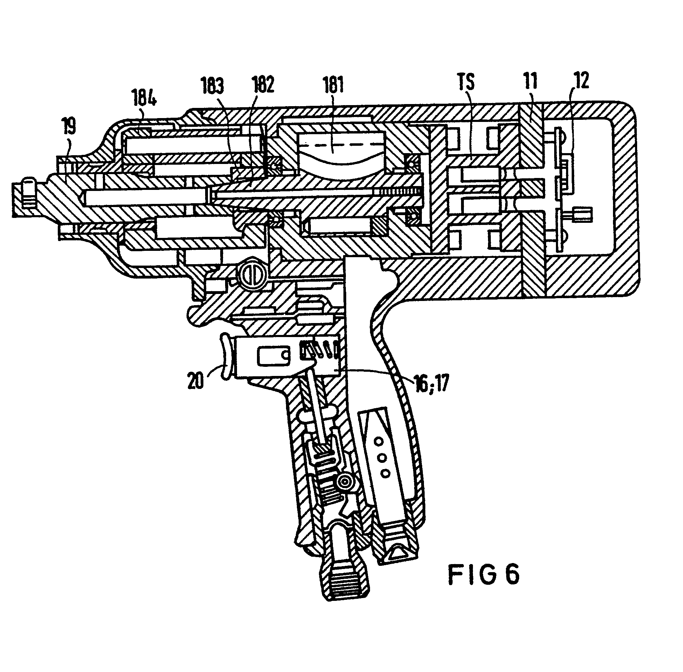

Ein motorisch angetriebener Drehmomentregelmechanismus, bei dem der Drehmomentaufnehmer nach dieser Erfindung benutzt wird, wird nun im einzelnen mit Hinblick auf die Fig. 4, 5 und 6 beschrieben.

Fig. 4 zeigt dabei die Schaltung und die Betriebsprinzipien des Drehmomentschraubers;

Fig. 5 ist eine Skizze, die benutzt wird, um den Betrieb des Schraubers zu erklären, und

Fig. 6 ist eine Querschnittsansicht der praktischen Konstruktion des Drehmomentschraubers.

In Fig. 4 bezeichnet das Bezugszeichen 11 den Hauptteil des Schraubers. TS bezeichnet einen Drehmomentaufnehmer nach der vorliegenden Erfindung. Bezugszeichen 12 bedeutet einen Konverter, Bezugszeichen 13 eine Anzeigeeinheit, 14 ist eine elektrische Energiequelle, 15 eine Luftleitung, 16 ein elektrisch betriebenes Ventil, 17 eine Druckluftquelle, 18 ein Schraubendrehermechanismus, 181 ein pneumatischer Motor, 182 eine Antriebswelle, 183 ein Kupplungsmechanismus, 184 ein Untersetzungsgetriebe oder ein Schlagmechanismus, 19 eine Schrauberspindel, und Bezugszeichen 20 bezeichnet ein Betätigungselement (Fig. 6).

Der Grundteil 11 entspricht dem Gehäuse des Drehmomentschraubers, das durch einen Benutzer des Schraubers gehalten wird oder das mit einer Maschine verbunden ist, die damit zusammen benutzt wird. Der Drehmomentaufnehmer TS ist an dem pneumatischen Motor 181 befestigt, die Abtriebswelle 182 des pneumatischen Motors ist durch den Kupplungsmechanismus 183 an das Untersetzungsgetriebe oder Schlagwerk 184 kuppelbar, das dann seinerseits mit der Schrauberspindel 19 verbunden ist.

Der Schraubvorgang und die Drehmomentregelung des Drehmomentschraubers läuft wie folgt ab: Wie in der Fig. 5 dargestellt, wird ein Bolzen oder eine Mutter N durch die Schrauberspindel 19 des antreibenden Mechanismus 18 in eine vorbestimmte Richtung bewegt. Die Reaktionskraft $T_L$ der antreibenden Kraft T ($T_L = -T$) wird durch den Antriebsmechanismus 18 auf den Drehmomentaufnehmer TS übertragen. Das Drehmoment $T_L$ wird – wie vorbeschrieben – durch den Drehmomentaufnehmer in Kapazitätsänderungen umgewandelt, die durch den Konverter 12 weiter umgewandelt werden in ein elektrisches Signal, das proportional dem Drehmoment $T_L$ ist. Dieses Signal wird durch die Anzeigeeinheit 13 angezeigt. Wenn das Drehmoment einen vorbestimmten Wert erreicht, wird ein Signal vom Konverter 12 zu dem elektrisch betriebenen Ventil 16 gegeben, welches das Ventil zum Schliessen veranlasst. Wenn das Ventil 16 geschlossen ist, ist die Luftzufuhr zum pneumatischen Motor 181 unterbrochen. Damit ist auch der Betrieb des pneumatischen Motors 181 stillgesetzt.

Die vorliegende Erfindung bietet, weil das zu messende Drehmoment durch ein zylindrisches Torsionsrohr des Drehmomentaufnehmers in Form von Kapazitätsänderungen erfasst wird, die folgenden vorteilhaften Eigenschaften:

1. Durch Auswahl des Materials und der Betriebscharakteristiken des Torsionsrohres können die Empfindlichkeit, Linearität der Messwertum-

5

wandlung und die Reproduzierbarkeitseigenschaften des Drehmomentaufnehmers wesentlich verbessert werden.

2. Die Temperaturcharakteristik des Drehmomentaufnehmers ist nur abhängig vom Temperaturkoeffizienten des Elastizitätsmoduls des Materials des Torsionsrohres, der aussergewöhnlich klein (–0,04%/°C) gemacht werden kann, wenn das Rohr aus rostfreiem Stahl besteht. Falls erwünscht, kann auch eine Legierung (Elinvar) mit einem Temperaturkoeffizienten «O» zur Herstellung des Torsionsrohres benutzt werden.

3. Da Metall und ein keramisches Material zur Herstellung des Drehmomentaufnehmers benutzt werden (das keramische Material wird für die Isolatoren 5a und 5a' verwendet), sind jahrelange Veränderungen der Charakteristiken ausgeschlossen. Deshalb ist der Betrieb ausserordentlich stabil und zuverlässig.

4. Die Empfindlichkeit für Axialkräfte, Biegemomente und andere Störungen, ausgenommen des Drehmomentes, ist ausserordentlich klein.

5. Das Verhältnis der Kapazitätsänderung zum Drehmoment ist fünf- bis zehnmal grösser als die Empfindlichkeit von üblichen Einrichtungen wie denen, die Dehnungsmessstreifen anwenden. So wird der Messbereich für das Drehmoment bemerkenswert erweitert.

6. Die Überlast- und Schockwiderstandsfähigkeit des Drehmomentaufnehmers wird bestimmt von der Materialstärke des Torsionsrohres. Entsprechend ist die Widerstandsfähigkeit zwei- bis viermal grösser als die von Dehnungsmessstreifenaufnehmern.

7. Der Drehmomentaufnehmer der vorliegenden Erfindung kann für die optimale Regelung von verschiedenen Werkzeugen und Einrichtungen, beispielsweise vom Drehmomentschrauber, der oben beschrieben ist, benutzt werden.

### Erklärung der Bezugszeichen:

1 und 1' bezeichnen zwei Drehmomentübertragungswellen,
2, 2' zwei Flansche,
3 bezeichnet ein zylindrisches Torsionsrohr,
4 eine verdrehbare Kondensatorplatte,
5, 5' bezeichnen zwei Platten für Gegenelektroden,
5a, 5a' zwei Platten aus Isoliermaterial,
5b, 5b', 5c und 5c' Kondensatorbeläge,
6 bezeichnet den Innenraum des Torsionsrohres,
7 Anschlussdrähte,
8 hermetisch verschlossene Zuführungsgänge,
11 einen Grundteil,
12 einen Konverter,
13 eine Anzeigeeinheit,
14 eine elektrische Energiequelle,
15 einen Luftschlauch,
16 ein elektrisch betriebenes Ventil,
17 eine Druckluftquelle,
18 einen Schraubendrehermechanismus,
181 einen pneumatischen Motor,

182 eine Antriebswelle,
183 eine Kupplung,
184 ein Untersetzungsgetriebe oder einen Schlagmechanismus,
19 eine Schrauberspindel,
P eine Drehmomentaufnehmerwelle,
DMS zwei Dehnungsmessstreifen,
TS einen Drehmomentaufnehmer,
N einen Bolzen oder eine Mutter.

### Patentansprüche

1. Kapazitiver Drehmomentaufnehmer mit einer Torsionswelle und in zwei voneinander beabstandeten Querschnittsebenen der Welle an dieser befestigten, in zur Wellenlängsachse symmetrischen parallelen Ebenen angeordneten Kondensatorplatten mit torsionsproportional veränderlichem gegenseitigen Abstand und mit elektrischer Auswertung der resultierenden Kapazitätsänderungen, dadurch gekennzeichnet, dass als Torsionswelle ein Torsionsrohr (3) vorgesehen ist, in dem innen eine Kondensatorplatte (4) angeordnet und an einem (2) von zwei mit dem Torsionsrohr (3) an dessen beiden Enden verbundenen Flanschen (2, 2') befestigt ist und in dem mindestens eine weitere, an dem anderen Flansch (2') befestigte Platte (5a), die mit Abstand von und parallel zu der Kondensatorplatte (4) angeordnet ist, beiderseits einer in Achsrichtung des Torsionsrohres (3) verlaufenden Mittellinie auf ihrer der Kondensatorplatte (4) zugewandten Seite zwei Kondensatorbeläge (5b, 5c) trägt.

2. Kapazitiver Drehmomentaufnehmer nach Anspruch 1, dadurch gekennzeichnet, dass die Kondensatorbeläge (5b, 5c) zusammen mit der Kondensatorplatte (4) einen Differentialkondensator bilden.

3. Kapazitiver Drehmomentaufnehmer nach Anspruch 1 oder 2, dadurch gekennzeichnet, dass das Torsionsrohr (3) aus nichtrostendem Stahl besteht.

4. Kapazitiver Drehmomentaufnehmer nach einem der vorhergehenden Ansprüche, dadurch gekennzeichnet, dass das Torsionsrohr (3) evakuiert ist.

5. Kapazitiver Drehmomentaufnehmer nach einem der vorhergehenden Ansprüche, dadurch gekennzeichnet, dass die Kondensatorbeläge (5b, 5c; 5b', 5c') tragende, mindestens eine Platte (5a, 5a') aus keramischem Material besteht.

6. Kapazitiver Drehmomentaufnehmer nach einem der vorhergehenden Ansprüche, gekennzeichnet durch seine Verwendung bei einem Drehmomentschrauber.

### Claims

1. A capacitive torque pick-up comprising a torsion shaft, capacitor plates which are secured to the shaft in two cross-sectional planes of the shaft spaced apart and arranged in parallel planes symmetrical with respect to the longitudinal axis of the shaft, said capacitor plates having a distance apart which is variable so as to be proportional to the torsion, and with electrical analysis of the resulting changes in capacity, characterised in that as a torsion shaft, a torsion pipe (3) is provided in the interior of which a capacitor plate (4) is arranged which is secured to one (2) of two flanges (2, 2') which are connected to the two ends of the torsion pipe (3), and in which torsion pipe (3), at least one further plate (5a), which is secured to the other flange (2') and arranged so as to be spaced from and parallel to the capacitor plate (4), carries two capacitor coatings (5b, 5c) on either side of a centre line which extends in the axial direction of the torsion pipe (4) on the side of said plate (5a) which faces towards the capacitor plate (4).

2. A capacitive torque pick-up as claimed in claim 1, characterised in that the capacitor coatings (5b, 5c), together with the capacitor plate (4), from a differential capacitor.

3. A capacitive torque pick-up as claimed in claim 1 or claim 2, characterised in that the torsion pipe (3) is made of stainless steel.

4. A capacitive torque pick-up as claimed in one of the preceding claims, characterised in that the torsion pipe (3) is evacuated.

5. A capacitive torque pick-up as claimed in one of the preceding claims, characterised in that at least one plate (5a, 5a') carrying the capacitor coatings (5b, 5c; 5b', 5c') is made of a ceramic material.

6. A capacitive torque pick-up as claimed in one of the preceding claims, characterised by its use with a torque screw.

**Revendications**

1. Détecteur capacitif d'un couple de torsion, avec un arbre de torsion, avec des plaques de condensateur fixées à cet arbre dans deux plans transversaux de celui-ci et à distance l'un de l'autre, lesdites plaques étant disposées dans des plans symétriques par rapport à l'axe longitudinal dudit arbre, à une distance l'une de l'autre qui est variable proportionnellement à la torsion, et avec une évaluation électrique des variations de la capacité qui en résultent caractérisé par le fait qu'il est prévu, en tant qu'arbre de torsion, un tube de torsion (3) à l'intérieur duquel est disposée une plaque de condensateur (4) qui est fixée à l'un (2) de deux flasques (2, 2') fixés aux deux extrémités du tube de torsion (3), et à l'intérieur duquel est disposée au moins une seconde plaque (5a) fixée à l'autre flasque (2'), située à distance de et parallèlement à la plaque de condensateur (4) et qui porte, de part et d'autre d'une ligne médiane qui s'étend dans le sens de l'axe du tube de torsion (3), deux revêtements de condensateur (5b, 5c) sur son côté tourné vers la plaque de condensateur (4).

2. Détecteur capacitif d'un coupe de torsion selon la revendication 1, caractérisé par le fait que les revêtements de condensateur (5b, 5c) forment, avec la plaque de condensateur (4) un condensateur différentiel.

3. Détecteur capacitif d'un couple de torsion selon la revendication 1 ou 2, caractérisé par le fait que le tube de torsion (3) est réalisé avec un acier inoxydable.

4. Détecteur capacitif d'un couple de torsion selon l'une des revendications précédentes, caractérisé par le fait que le tube de torsion (3) est évacué.

5. Détecteur capacitif d'un couple de torsion selon l'une des revendications précédentes, caractérisé par le fait qu'au moins l'une des plaques (5a, 5a') qui porte les revêtements de condensateur (5b, 5c, 5b', 5c') est faite avec un matériau céramique.

6. Détecteur capacitif d'un couple de torsion selon l'une des revendications précédentes, caractérisé par sa mise en oeuvre dans un tournevis à couple de torsion.

FIG 1

FIG 2A

FIG 2B

FIG 3

FIG 4

FIG 5

0108894

FIG 6

13